# EUROPEAN PATENT APPLICATION

(11) **EP 3 974 898 A1**
(43) Date of publication of application: **30.03.2022**
(21) Application number: 21199419.9
(22) Date of filing: 28.09.2021
(51) Int. Cl.: G02F 1/153, G02F 1/1524

(54) **ELECTROCHROMIC GLASS PANE AND METHOD OF PRODUCING THE SAME**

(30) Priority: 28.09.2020 CN 202011041676; 26.02.2021 NL 2027661
(71) Applicant: Brite Hellas AE, 57001 Thessaloniki (GR)
(72) Inventor: Stathatos, Ilias, 26222 Patras (GR); Kanopoulos, Nikolaos, 54655 Thessaloniki (GR); Makris, Theodoros, 26226 Patras (GR); Giannopoulos, Panagiotis, 26223 Patras (GR); Fejzaj, Ardenis, 26504 Patras (GR)
(74) Representative: Arnold & Siedsma

(57) **Abstract**

Electrochromic glass pane, comprising an assembly of a first part, comprising a first glass plate forming a first conductive substrate having a first conductive surface and a first non-conductive surface opposite the first conductive surface, and a negative semiconducting film on the first conductive surface, a second part, comprising a second glass plate forming a second conductive substrate having a second conductive surface and a second non-conductive surface opposite the second conductive surface, and a positive semiconducting film on the second conductive surface, the negative and positive semiconducting films being configured to function as negative and positive electrodes of the electrochromic glass pane, respectively, the first conductive surface facing the second conductive surface, an electrolyte being arranged between the first and second conductive surfaces, and the negative and positive semiconducting films being formed by jet printing first and second electrochromic inks onto the first and second conductive surfaces, respectively.

## Description

The present invention relates to an electrochromic glass pane. The present invention further relates to a method of producing an electrochromic glass pane.

### BACKGROUND INFORMATION

Electrochromic devices in glass window applications are typically arranged on a first one of two glass panes of a composite double glass pane, wherein a second glass pane is arranged at a constant distance from the first glass pane and the space between them is filled with gas or air.

Electrochromic technologies for fabricating electrochromic devices on glass or plastic substrates using semiconducting oxides typically employ techniques such as RF sputtering, DC sputtering method, spray pyrolysis technique or chemical vapor deposition for deposition of all material on the glass or plastic substrates. For electrochromic devices, fabrication technology concentrates on the use of vacuum or spray techniques.

It is an object of the invention to enhance the performance of electrochromic glass panes and to provide an enhanced method of producing electrochromic glass panes.

### SUMMARY

According to a first aspect, the present invention provides an electrochromic glass pane, comprising an assembly of a first part, comprising a first glass plate covered on one side thereof with a conductive layer so that the first glass plate forms a first conductive substrate having a first conductive surface and a first non-conductive surface opposite the first conductive surface, and a negative semiconducting film on the first conductive surface, the negative semiconducting film being configured to function as a negative electrode of the electrochromic glass pane, a second part, comprising a second glass plate covered on one side thereof with a conductive layer so that the second glass plate forms a second conductive substrate having a second conductive surface and a second non-conductive surface opposite the second conductive surface, and a positive semiconducting film on the second conductive surface, the positive semiconducting film being configured to function as a positive electrode of the electrochromic glass pane, and an electrolyte, wherein the first part and the second part are arranged on top of each other, such that the first conductive surface faces the second conductive surface, with the first and second non-conductive surfaces facing away from each other, wherein the electrolyte is arranged between the first and second conductive surfaces, and wherein the negative semiconducting film and the positive semiconducting film are formed by jet printing first and second electrochromic inks onto the first conductive surface and the second conductive surface, respectively.

In a preferred embodiment of the electrochromic glass pane, the first electrochromic ink for the formation of the negative semiconducting film comprises a colloidal solution comprising WO₃ or TiO₂ or MoO₃ or V₂O₅ or Nb₂O₅ or Ti-modified WO₃ or Ti-modified Nb₂O₅ or Nb-modified WO₃

In a preferred embodiment, the second electrochromic ink for the formation of the negative semiconducting film comprises a colloidal solution comprising Ce-modified TiO₂ or Ce-Li-modified TiO₂or Ni-modified TiO₂or Ni-Li-modified TiO₂ or Ni-Al-modified TiO₂.

In a preferred embodiment, the electrolyte is a polymeric membrane acting as an electrolyte.

In a preferred embodiment, the electrochromic glass pane further comprises a hole that extends between an exterior of the glass pane and an interior space between the negative semiconducting film and the positive semiconducting film for filling the interior space with the electrolyte.

In a preferred embodiment, the electrochromic glass pane further comprises a UV blocking film on the first non-conductive surface of the first conductive substrate of the first part of the electrochromic glass pane and/or on the second non-conductive surface of the second conductive substrate of the second part of the electrochromic glass pane.

Electrochromic glass pane according to claim 6, wherein the UV blocking film is formed by inkjet printing a colloidal solution on the first non-conductive surface of the first conductive substrate and/or on the second non-conductive surface of the second conductive substrate, respectively.

In a preferred embodiment, the electrochromic glass pane further comprises a safety tempered glass outside of the first conductive substrate and/or outside of the second conductive substrate.

In a preferred embodiment, the electrochromic glass pane further comprises a thermal insulating gel between the safety tempered glass and the first conductive substrate and/or between the safety tempered glass and the second conductive substrate, respectively. Thermal insulation and safety properties of such double panes can be enhanced using tempered glass in contact with the conductive substrate(s) device while the space between the substrates is filled with the thermal insulating gel.

In a preferred embodiment, the electrochromic glass pane further comprises a controller connected to the electrochromic glass pane configured to control the transmittance of the electrochromic glass pane.

In a preferred embodiment, the controller is configured to be controlled manually or using Bluetooth.

In a preferred embodiment, the negative and positive semiconducting films are composed of nanocomposite semiconducting oxides.

In a preferred embodiment, the negative semiconducting film comprises inorganic nanocomposite oxides and/or modified inorganic nanocomposite oxides.

In a preferred embodiment, the first and second conductive substrates are substantially planar and uniform in thickness.

In a preferred embodiment, outer dimensions of the second conductive substrate and the first conductive substrate are substantially the same.

According to a second aspect, the present invention provides a method of producing an electrochromic glass pane, comprising manufacturing a first part of the glass pane, comprising providing a first glass plate, arranging on one side of the first glass plate a conductive layer so that the first glass plate forms a first conductive substrate having a first conductive surface and a first non-conductive surface opposite the first conductive surface, and by jet printing a first electrochromic ink, forming a negative semiconducting film on the first conductive surface, the negative semiconducting film being configured to function as a negative electrode of the electrochromic glass pane, manufacturing a second part of the glass pane, comprising providing a second glass plate, arranging on one side of the second glass plate a conductive layer so that the second glass plate forms a second conductive substrate having a second conductive surface and a second non-conductive surface opposite the second conductive surface, and by jet printing a second electrochromic ink, forming a positive semiconducting film on the second conductive surface, the positive semiconducting film being configured to function as a positive electrode of the electrochromic glass pane, placing the first part and the second part on top of each other, such that the first conductive surface faces the second conductive surface, with the first and second non-conductive surfaces facing away from each other, and applying an electrolyte between the first and second conductive surfaces.

In a preferred embodiment, the first electrochromic ink for the formation of the negative semiconducting film comprises a colloidal solution comprising WO₃ or TiO₂ or MoO₃ or V₂O₅ or Nb₂O₅ or Ti-modified WO₃ or Ti-modified Nb₂O₅ or Nb-modified WO₃

In a preferred embodiment, the second electrochromic ink for the formation of the negative semiconducting film comprises a colloidal solution comprising Ce-modified TiO₂ or Ce-Li-modified TiO₂or Ni-modified TiO₂or Ni-Li-modified TiO₂ or Ni-Al-modified TiO₂.

In a preferred embodiment, the step of applying an electrolyte between the first and second conductive surfaces comprises inkjet printing the electrolyte onto the negative semiconducting film and/or the positive semiconducting film before the first and the second part are placed on top of each other.

In a preferred embodiment, the electrolyte is a polymeric membrane acting as an electrolyte.

In a preferred embodiment, the step of applying an electrolyte between the first and second conductive surfaces comprises filling an interior space between the negative semiconducting film and the positive semiconducting film with the electrolyte through at least one hole that extends between an exterior of the glass pane and the interior space.

In a preferred embodiment, the method further comprises forming a UV blocking film on the first non-conductive surface of the first conductive substrate of the first part of the electrochromic glass pane and/or on the second non-conductive surface of the second conductive substrate of the second part of the electrochromic glass pane.

In a preferred embodiment, the UV blocking film is formed by inkjet printing on the first non-conductive surface of the first conductive substrate of the first part of the electrochromic glass pane and/or on the second non-conductive surface of the second conductive substrate of the second part of the electrochromic glass pane, respectively.

In a preferred embodiment, the method further comprises applying a safety tempered glass outside of the first conductive substrate and/or outside of the second conductive substrate.

In a preferred embodiment, the method further comprises disposing a thermal insulating gel between the safety tempered glass and the first conductive substrate and/or between the safety tempered glass and the second conductive substrate, respectively.

In a preferred embodiment, the step of disposing a thermal insulating gel comprises inkjet printing the thermal insulating gel.

In a preferred embodiment, the method further comprises connecting the electrochromic glass pane to a controller configured to control the transmittance of the electrochromic glass pane.

In a preferred embodiment, the controller is operated manually or using Bluetooth.

In a preferred embodiment, the negative and positive semiconducting films are composed of nanocomposite semiconducting oxides.

In a preferred embodiment, the negative semiconducting film comprises inorganic nanocomposite oxides and/or modified inorganic nanocomposite oxides.

In a preferred embodiment, the first and second conductive substrates are substantially planar and uniform in thickness.

In a preferred embodiment, outer dimensions of the second conductive substrate and the first conductive substrate are substantially the same.

The present invention specifically provides a thermally insulating and safety electrochromic glass and a method of producing thermally insulating and safety electrochromic glass based on inkjet printing for materials deposition. In this context, inkjet printing refers to the application of ink on a glass substrate in patterns using a printer with appropriate printing software. After the application of ink, the substrate can be either used directly or can be calcined at a high temperature to form nanocrystalline semiconducting oxides, depending on the application. The heating process sets and solidifies the ink residue on the substrate permanently anchored on this as uniform layers. Inkjet printing has a number of technical and cost advantages over conventional vacuum or spray techniques. Employing inkjet printing, the invention allows for scaling the production line to printing on almost any size of substrate and at almost any production quantity.

According to a further aspect, the present invention provides inks suitable for inkjet printing to cover the inner side of conductive glasses used for producing electrochromic devices. In particular, inkjet printing inks based on tungsten oxide (WO₃) - Titanium dioxide (TiO₂)-Molybdenum oxide (MoO₃) - Vanadium oxide (V₂O₅), Niobium oxide (Nb₂O₅), Titanium modified WO₃, Titanium modified Nb₂O₅, Niobium modified WO₃, Cerium modified TiO₂, Nickel modified TiO₂ Cerium-Lithium modified TiO₂, Nickel-Lithium and Nickel-Aluminum modified TiO₂ are provided.

In a further aspect, the present invention provides tooling for the production line for electrochromic devices. Preferably, the tooling is composed of a series of inkjet print stations and thermal curing stations.

Each inkjet printing station may be stationary and include a number of print heads that are depositing different materials on the substrate. The number of print heads employed is a function of the maximum width of the substrate that the production line supports. Each print head may support a width of about one meter and it can be installed with a variable number of nozzles for supporting different printing speed and amounts of deposited materials.

The print head preferably moves over the substrate at the print station at a speed that is proportional to the speed of material deposition supported by the print head. Based on this concept, the length of the substrate supported can be of any size. The print heads preferably are digitally controlled, and therefore, substrates of any size can be supported, provided that their width is within the maximum width supported by the print station.

Located beyond the print station may be a thermal curing station, which may be implemented via an open oven section that can provide curing at variable temperatures. The substrate preferably moves through the curing station for as long as a curing step requires at a predetermined temperature. Alternatively, a thermal curing step could be performed in batch mode through the insertion of multiple substrates with materials deposited onto them by the inkjet printer into a large oven station, which cures them off-line. If multiple cycles of inkjet printing deposition and thermal curing are desired, a substrate may be conveyed backwards, or in a loop, to the printing station for performance of subsequent cycles.

The inspection of the substrates moving on the production line may be performed with an operator in the loop using a three-dimensional (3D) image of the substrates. The 3D image preferably is taken automatically by a common digital camera used at selected parts of the production line and preferably is displayed at the inspector's station in real time. The 3D image may be processed using machine vision techniques to compare the 3D image against an acceptable standard image for detection of unacceptable deviations from the standard. The system that performs the imaging process may be based on a 3D Manufacturing Inspector Tool developed by Brite^{™}.

According to a further aspect, the present invention provides a production line configuration, and method of configuring a production line, that allow material deposition on a substrate having a width up to a maximum width, and a variable, programmable length, wherein a plurality of print heads deposit material by firing in parallel to cover the width while the substrate is conveyed past the print heads that cover the length by sequential deposition over time.

According to a further aspect, the present invention provides an inkjet-printable formulation of tungsten oxide (WO₃) - Titanium dioxide (TiO₂) - Molybdenum oxide (MoO₃)-Vanadium oxide (V₂O₅) - Niobium oxide (Nb₂O₅) based inks that results in a WO₃ or TiO₂ or MoO₃ or V₂O₅ - based semiconducting materials film. An inkjet-printable formulation of Titanium-Tungsten, Titanium-Niobium and Niobium-Tungsten based inks that results in a Ti-modified WO₃, a Ti-modified Nb₂O₅ and an Nb-modified WO₃ films and a method of formulating the titanium-tungsten, titanium-niobium and niobium-tungsten based inkjet-printable inks.

According to a further aspect, the present invention provides an inkjet-printable formulation of Titanium-Cerium and Titanium-Nickel based inks that results in a Ce modified TiO₂ and Ni modified TiO₂ films, and a method of formulating the cerium-titanium and nickel-titanium based inkjet-printable inks. An inkjet-printable formulation of Titanium-Cerium-Lithium, Titanium-Nickel-Lithium and Titanium-Nickel-Aluminum based inks that results in a Ce-Li modified TiO₂, Ni-Li and Ni-Al modified TiO₂ films, and a method of formulating the titanium-cerium-lithium and titanium-nickel-lithium based inkjet-printable inks.

According to a further aspect, the present invention provides a formulation for quasi-solid state electrolyte applied between the two glasses completing the electrochromic device.

According to a further aspect, the present invention provides a formulation for UV-curable quasi-solid state electrolyte applied between the two glasses completing the electrochromic device.

According to a further aspect, the present invention provides a formulation for a polymeric membrane applied between the two glasses, acting as electrolyte, completing the electrochromic device.

According to a further aspect, the present invention provides a conductive finger for the electric current application on the conductive surface and at the edge of the glass substrate.

According to a further aspect, the present invention provides a method for two glasses separation in a sandwich configuration for the electrochromic pane based on thermoplastic or UV curable materials.

According to a further aspect, the present invention provides a method for electrolyte inkjet printed on one of the two glasses before both glasses are fitted together in a sandwich configuration.

According to a further aspect, the present invention provides a method for gel inkjet printed on a tempered glass before it is fitted on one side of the electrochromic glass in a sandwich configuration.

According to a further aspect, the present invention provides a quality inspection system of glass substrates on an inkjet-printing production line of electrochromic panes, and a method of the quality inspection, using automated capture and display of three-dimensional images of the substrates in real-time.

### BRIEF DESCRIPTION OF THE DRAWINGS

By reference to the appended drawings, which illustrate exemplary embodiments of the present invention according to aspects of the invention, the detailed description provided below explains in detail various features, advantages and aspects of the present invention. As such, features of the present invention can be more clearly understood from the following detailed description considered in conjunction with the following drawings. Each exemplary aspect or embodiment illustrated in the drawings is not intended to be to scale, to be comprehensive of all aspects, or to be limiting of the invention's scope, for the invention may admit to other equally effective embodiments and aspects.

As such, the drawings are included to provide a further understanding and are incorporated in and constitute a part of this specification, wherein:
- Figure 1 shows a cross section of an exemplary embodiment of an Electrochromic pane (ECP) according to the present invention;
- Figure 2 shows a cross section of the Electrochromic Pane (ECP) of figure 1 combined with safety insulating tempered glass on one side;
- Figure 3 shows a cross section of the Electrochromic Pane (ECP) of figure 1 combined with safety insulating tempered glass on both sides;
- Figure 4 shows the transmittance as a function of the wavelength of incoming light for a biased and unbiased Electrochromic pane according to an embodiment of the present invention.

### DETAILED DESCRIPTION

As discussed, the invention relates to aspects of an all inkjet printer fabrication of Electrochromic panes combined with thermal insulating gel material and tempered glass. Specifically, the invention refers to a stack of three glasses in total, two of which compose the electrochromic glass and the third which is a tempered security glass can be put via a gel material onto to one of the two glasses consist the electrochromic device. Inkjet printing is a material-conserving deposition technique used for liquid inks comprising solutes dissolved in solvents. Inkjet printing involves the ejection of precise amounts of ink from ink filled chambers housing a piezoelectric material and connected to nozzles. Application of a voltage causes the piezoelectric material to change shape, contracting the chamber. Contraction of the chamber sets up a micro-shockwave causing a liquid drop to be ejected from the nozzle. The ejected drop of ink falls onto the substrate under the applied forces of gravity and air resistance. The spreading of the ink along the surface is governed by the momentum acquired throughout the motion and surface tension present on the surface of the substrate.

In general, Electrochromic Pane ("ECP") comprise a two electrode sandwich type glass pane composed of nanocomposite semiconducting oxides on glass substrates and an electrolyte in-between the two conductive substrates. An exemplary electrically-conductive substrate comprises fluorine-doped tin oxide ("FTO") coated glass, which is ideal for use in a wide range of devices, including applications such as optoelectronics, touch screen displays, thin film photovoltaics, energy-saving windows, radio-frequency interference ("RFI") or electromagnetic interference ("EMI") shielding and other electro-optical and insulating applications. Fluorine-doped tin oxide has been recognized as a very promising material because it is relatively stable under atmospheric conditions, chemically inert, mechanically hard, high-temperature resistant and it has a high tolerance to physical abrasion.

In the present invention, an exemplary substrate, such as a FTO glass substrate, is used with electrochromic inks that are jetted onto the substrate. A series of inkjet print stations can be used to speed up the process or separate the printing steps of the materials. A production line configuration may include inkjet print heads placed in fixed positions above a substrate conveyor, wherein the substrate moves on a moving conveyor at controlled speed. The material deposition may be digitally controlled by regulating the ink drop of the inkjet print heads.

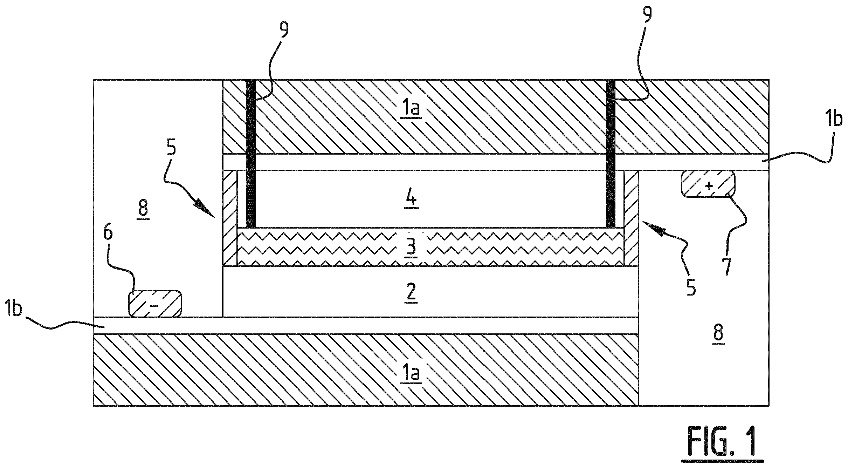

In the drawings, Figures 1 to 3 show cross-sectional side views of exemplary embodiments of a dual-electrode substrate electrochromic pane, wherein different layers thereof are indicated by different reference numerals.

Specifically, Figure 1 shows a dual-electrode substrate electrochromic pane, comprising:
- Glass layers 1a;
- Fluorine-doped tin oxide conductive layers 1b;
- An inkjet printed thin film 2, comprising WO₃, or TiO₂, or MoO₃, or V₂O₅, or Nb₂O₅, or Ti-modified WO₃, or Ti-modified Nb₂O₅, or Nb-modified WO₃;
- An electrolyte 3;
- An inkjet printed thin film 4, comprising Cerium-, or Nickel-, or Ce-Li-, or Ni-Li-, or Ni-Al- modified TiO₂;
- A thermoplastic or UV curable sealant 5;
- A negative electrode 6;
- A positive electrode 7;
- Sealing material 8; and
- Drilled holes 9.

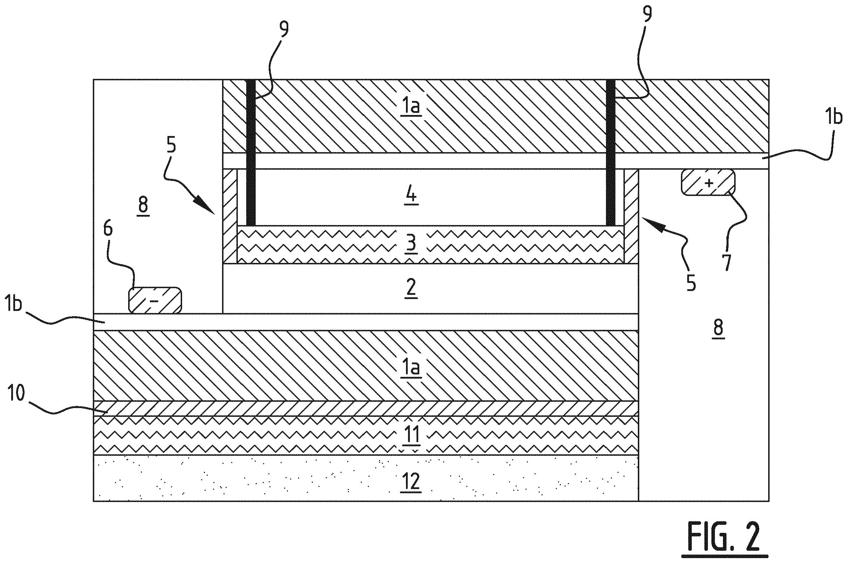

Figure 2 shows a dual-electrode substrate electrochromic pane combined with tempered safety Glass (TG) on a bottom side, comprising:
- Glass layers 1a;
- Fluorine-doped tin oxide conductive layers 1b;
- An inkjet printed thin film 2, comprising WO₃, or TiO₂, or MoO₃, or V₂O₅, or Nb₂O₅, or Ti-modified WO₃, or Ti-modified Nb₂O₅, or Nb-modified WO₃;
- An electrolyte 3;
- An inkjet printed thin film 4, comprising Cerium-, or Nickel-, or Ce-Li-, or Ni-Li-, or Ni-Al- modified TiO₂;
- A thermoplastic or UV curable sealant 5;
- A negative electrode 6;
- A positive electrode 7;
- Sealing material 8; and
- Drilled holes 9;
- A UV blocking inkjet printed thin film 10
- A layer of gel insulating material 11; and
- A layer of tempered safety glass 12.

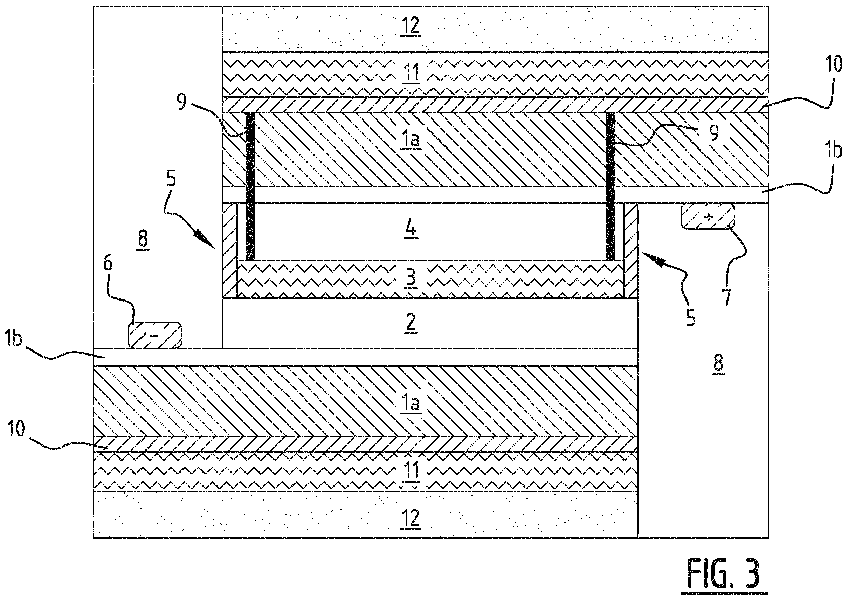

Figure 3 shows a dual-electrode substrate electrochromic pane combined with tempered safety Glass (TG) on a bottom side and a top side, comprising:
- Glass layers 1a;
- Fluorine-doped tin oxide conductive layers 1b;
- An inkjet printed thin film 2, comprising WO₃, or TiO₂, or MoO₃, or V₂O₅, or Nb₂O₅, or Ti-modified WO₃, or Ti-modified Nb₂O₅, or Nb-modified WO₃;
- An electrolyte 3;
- An inkjet printed thin film 4, comprising Cerium-, or Nickel-, or Ce-Li-, or Ni-Li-, or Ni-Al- modified TiO₂;
- A thermoplastic or UV curable sealant 5;
- A negative electrode 6;
- A positive electrode 7;
- Sealing material 8; and
- Drilled holes 9;
- UV blocking inkjet printed thin films 10
- Layers of gel insulating material 11; and
- Layers of tempered safety glass 12.

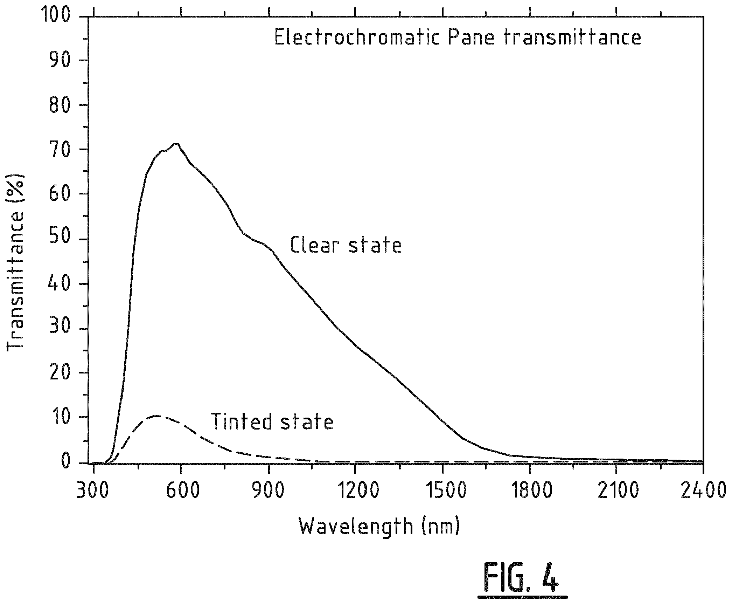

Figure 4 shows the transmittance of a biased and an unbiased electrochromic glass pane that comprises consecutively from bottom to top a first fluorine-doped tin oxide conductive layer, a Ti-W-O containing coating, an electrolyte, a Ni-Li-Ti-O containing coating and a second fluorine-doped tin oxide conductive layer.

A positive voltage ranging from 1.5- to 3 V can change the color of the glass pane to grey, brown, or blue. The transmittance of the glass pane in Figure 4 can be varied depending on the thickness of the films 2 and 4. Besides, the application of a negative voltage of -0.5 to -2.0 V could affect the decoloration of the glass pane. The phenomenon is reversible for many cycles of negative and positive voltage application.

### Negative Electrode Substrate

A negative electrode substrate shown in stages of manufacture in Figure 2 of the cell, may comprise, for instance, a variety of inorganic nanocomposite oxides, or modified inorganic nanocomposite oxides, namely tungsten oxide (WO₃), titanium dioxide (TiO₂), molybdenum oxide (MoO₃), vanadium oxide (V₂O₅), Niobium oxide (Nb₂O₅) etc. in the shape of thin film cover homogeneously the glass substrate. The thickness of the semiconducting thin films may vary from 0.25 to 0.5 micrometer. The length of the films may be varied from 10 cm to 120 cm (100-1200 mm) and the width of the films may also be varied from 10 cm to 100 cm (100-1000 mm). The films are inkjet-printed using ink comprising nanoparticles of the appropriate metal oxides.

### Material Formulation for Inkjet Application and Printing Procedure for negative electrode.

Formation of an exemplary thin semiconducting oxide film on a transparent conductive glass substrate for use as a negative electrode may comprise, for instance, use of purely chemical processes through inkjet printing of a colloidal solution. Suitable precursor solutions varied with semiconducting oxide can be used. Examples for materials' formulations for each semiconducting oxide are the followings:
***WO₃ Solution formulation:*** 7 ml of Hydrogen Peroxide are mixed with 1 g Tungsten powder (0.2-1 µm particle size). When the exothermic reaction has ended, 3.5 gr of 2-Propoxyethanol was added to the sol. The excess hydrogen peroxide was catalytically removed using noble metal foil such as platinum as an example. The mixture represents solution A. Besides, 0.04 gr of Glycerol or Ethylene Glycol are mixed with 0.22 g Triton X-100 or 0.16 g of Pluronic P123 or 0.18 g of Pluronic F127, 0.5 gr of 3-Methoxypropionitrile and 0.6 gr Terpineol. This mixture represents solution B. The mixture of solutions A and B represents the ink for the printing.

### TiO₂ Solution formulation:

A colloidal solution was made as follows: about 2.5 mL Acetonitrile or 2-Propoxyethanol and 1.2 gr Terpineol were mixed with about 0.71 g Triton X-100 or 0.33 g of Pluronic P123 or 0.30 g of Pluronic F127. Then, about 0.32 g acetic acid (AcOH) and about 0.25 g titanium isopropoxide or 0.3 g of titanium butoxide were added under vigorous stirring and ambient conditions. The final solution represents the ink for the printing.

***MoO₃ Solution formulation:*** about 2.5 ml of Hydrogen Peroxide are mixed with about 0.1 g Molybdenum powder (0.1-1 µm particles). The sol is stirring at 45°C for 15 min. This mixture represents solution A. Besides, 1 ml of 2-Propoxyethanol Ethanol or Isopropyl alcohol, 0.5 gr Terpineol and 0.35 gr 3-Methoxypropionitrile are mixed with 0.36 g Triton X-100 or 0.16 g of Pluronic P123 or 0.16 g of Pluronic F127. This mixture represents solution B. The mixture of solutions A and B represents the ink for the printing.

***V₂O₅ Solution formulation:*** about 10 ml of Hydrogen Peroxide are mixed with about 1 g vanadium powder (100 mesh). The sol is stirring at room temperature for 6h. This mixture represents solution A. Besides, 1.5 ml of 3-Methoxypropionitrile or Isopropyl alcohol and 0.5 gr Terpineol are mixed with 0.25 g Triton X-100 or 0.14 g of Pluronic P123 or 0.22 g of Pluronic F127. This mixture represents solution B. The mixture of solutions A and B represents the ink for the printing.

### Nb₂O₅ Solution formulation:

5ml of Ethanol are mixed with 0.34g Niobium(V) chloride. Afterwards, a mixture of 0.96g Triton X-100 or 0.7g Pluronic P123 or 0.7g of Pluronic F127, 2.64g Terpineol and 0.5ml Hydrochloric Acid was added. The final mixture represents the ink for printing.

### Titanium-modified WO₃ Solution formulation:

7 ml of Hydrogen Peroxide are mixed with 1 g Tungsten powder (0.2-1 µm particle size). When the exothermic reaction has ended, 3.5 gr of 2-Propoxyethanol was added to the sol. The excess hydrogen peroxide was catalytically removed using noble metal foil such as platinum as an example. The mixture represents solution A. Besides, 0.1 g Titanium Butoxide are mixed with 0.4 gr of 2-Propoxyethanol, 0.22 g Triton X-100 or 0.16 g of Pluronic P123 or 0.18 g of Pluronic F127, 0.5 gr of 3-Methoxypropionitrile and 0.5 gr Terpineol. This mixture represents solution B. The mixture of solutions A and B represents the ink for the printing

### Titanium-modified Nb₂O₅ Solution formulation:

7ml of Ethanol are mixed with 0.8g Niobium(V) chloride. Afterwards, a mixture of 0.96g Triton X-100 or 0.7g Pluronic P123 or 0.7g of Pluronic F127, 2.64g Terpineol, 0.5ml Hydrochloric Acid and 0.06g Titanium Butoxide was added. The final mixture represents the ink for printing.

### Niobium-modified WO₃ Solution formulation:

7 ml of Hydrogen Peroxide are mixed with 1 g Tungsten powder (0.2-1 µm particle size). When the exothermic reaction has ended, 3.5 gr of 2-Propoxyethanol was added to the sol. The excess hydrogen peroxide was catalytically removed using noble metal foil such as platinum as an example. The mixture represents solution A. Besides, 0.1 g Nb powder are mixed with 0.4 gr of 2-Propoxyethanol, 0.22 g Triton X-100 or 0.16 g of Pluronic P123 or 0.18 g of Pluronic F127, 0.5 gr of 3-Methoxypropionitrile and 0.5 gr Terpineol. This mixture represents solution B. The mixture of solutions A and B represents the ink for the printing

The inkjet printing station may include a drop-on-demand (DOD) piezoelectric inkjet nozzle head with 16 or more nozzles, depending on the printer, spaced at about 254 microns with typical drop sizes of between 1 and 10 picoliters. The print head preferably is mounted onto a computer-controlled three-axis system capable of movement accuracy of 5 µm.

For printing of tungsten trioxide, as an example, the substrate temperature (T_{sub}) may be set at room temperature, while the temperature of the cartridge (T_{head}) may be set at about 28°C. The Cartridge Print Height (h_{cart}), which is the gap between the nozzle and the printed surfaces, may be about 0.5 mm or more during printing depending on the material. The ejection of the droplets may be performed using 16 to 128 nozzles by applying a firing voltage of 15 to 20 V for an impulse having an overall pulse duration lasting at about 24 µs, at a jetting frequency of about 10 kHz. Optimal film uniformity may be achieved by printing at dot-to-dot spacing of 20-25 µm, known as drop spacing. Exemplary parameters followed for other inkjet printed materials appear in Tables 1, 2, 3 and 4.

Exemplary printing parameters as an example for a colloidal dispersion of WO₃ nanoparticles are listed in Table 1.

**Table 1: Exemplary printing parameters for WO₃ ink.**

| |
|---|
| Width of waveform (µs): 23.936 |
| Maximun Jetting Frequency (kHz): 10 |
| Firing voltage (V): 17 |
| Meniscus Vacuum (inches H₂O): 1 |
| Cartridge Temperature (°C): 28 |
| Cartridge Height (mm): 0.700 |
| Substrate Temperature (°C): ambient |

Exemplary printing parameters as an example for a colloidal dispersion of TiO₂ nanoparticles are listed in Table 2.

**Table 2: Exemplary printing parameters for TiO₂ink.**

| |
|---|
| Width of waveform (µs): 24.830 |
| Maximum Jetting Frequency (kHz): 10 |
| Firing voltage (V): 20-21 |
| Meniscus Vacuum (inches H₂O): 3 |
| Cartridge Temperature (°C): 28 |
| Cartridge Height (mm): 0.700 |
| Substrate Temperature (°C): ambient |

Exemplary printing parameters as an example for a colloidal dispersion of MoO₃ nanoparticles are listed in Table 3.

**Table 3: Exemplary printing parameters for MoO₃ink.**

| |
|---|
| Width of waveform (µs): 23.740 |
| Maximun Jetting Frequency (kHz): 10 |
| Firing voltage (V): 18 |
| Meniscus Vacuum (inches H₂O): 3.5 |
| Cartridge Temperature (°C): 28 |
| Cartridge Height (mm): 0.700 |
| Substrate Temperature (°C): ambient |

Exemplary printing parameters as an example for a colloidal dispersion of V₂O₅ nanoparticles are listed in Table 4.

**Table 4: Exemplary printing parameters for V₂O₅ ink.**

| |
|---|
| Width of waveform (µs): 25.123 |
| Maximun Jetting Frequency (kHz): 10 |
| Firing voltage (V): 18 |
| Meniscus Vacuum (inches H₂O): 3 |
| Cartridge Temperature (°C): 28 |
| Cartridge Height (mm): 0.700 |
| Substrate Temperature (°C): ambient |

Exemplary printing parameters as an example for a colloidal dispersion of Nb₂O₅ nanoparticles are listed in Table 5.

**Table 5: Exemplary printing parameters for Nb₂O₅ ink**

| |
|---|
| Width of waveform (µs): 24.290 |
| Maximun Jetting Frequency (kHz): 10 |
| Firing voltage (V): 20 |
| Meniscus Vacuum (inches H₂O): 2.5 |
| Cartridge Temperature (°C): 28 |
| Cartridge Height (mm): 0.700 |
| Substrate Temperature (°C): ambient |

Exemplary printing parameters as an example for a colloidal dispersion of Ti-modified WO₃ nanoparticles are listed in Table 6.

**Table 6: Exemplary printing parameters for Titanium-modified WO₃ ink**

| |
|---|
| Width of waveform (µs): 23.936 |
| Maximun Jetting Frequency (kHz): 10 |
| Firing voltage (V): 17 |
| Meniscus Vacuum (inches H₂O): 1 |
| Cartridge Temperature (°C): 28 |
| Cartridge Height (mm): 0.700 |
| Substrate Temperature (°C): ambient |

Exemplary printing parameters as an example for a colloidal dispersion of Ti-modified Nb₂O₅ nanoparticles are listed in Table 7.

**Table 7: Exemplary printing parameters for Titanium-modified Nb₂O₅ ink**

| |
|---|
| Width of waveform (µs): 24.290 |
| Maximun Jetting Frequency (kHz): 10 |
| Firing voltage (V): 20 |
| Meniscus Vacuum (inches H₂O): 2.5 |
| Cartridge Temperature (°C): 28 |
| Cartridge Height (mm): 0.700 |
| Substrate Temperature (°C): ambient |

Exemplary printing parameters as an example for a colloidal dispersion of Nb-modified WO₃ nanoparticles are listed in Table 8.

**Table 8: Exemplary printing parameters for Niobium-modified WO₃ ink**

| |
|---|
| Width of waveform (µs): 24.120 |
| Maximun Jetting Frequency (kHz): 10 |
| Firing voltage (V): 19 |
| Meniscus Vacuum (inches H₂O): 2 |
| Cartridge Temperature (°C): 28 |
| Cartridge Height (mm): 0.700 |
| Substrate Temperature (°C): ambient |

The printing procedure may be varied and repeated from 1 to 10 times depending on the composition of the ink. Exemplary FTO glass substrates may be led to an oven and subjected to a curing procedure lasting from 15 to 30 minutes at 450°C to 550°C depending on the metal oxide. The printing procedure may be repeated successive times, until the appropriate thickness of the films is obtained.

### Positive Electrode Substrate

Formation of an exemplary thin film such as a Cerium modified TiO₂, Nickel modified TiO₂, Ce-Li modified TiO₂, Ni-Li modified TiO₂ and Ni-Al modified TiO₂ films, on the conductive side of the transparent conductive glass substrate can be made, for instance, by purely chemical processes by inkjet printing a colloidal solution, for example, in which controlled hydrolysis and polymerization of titanium butoxide, or another alkoxide of the Titanium family, takes place in the presence of a rare earth Cerium (Ce) salt such as Cerium nitrate, or other salt of the cerium family, or in the presence of a Nickel (Ni) salt such as Nickel nitrate, or other salt of the nickel family. Moreover, controlled hydrolysis and polymerization of titanium butoxide, or another alkoxide of the Titanium family, can take place in the presence of Lithium (Li) salt such as Lithium Perchlorate, or other salt of the Lithium family, or of Aluminum (Al) salt such as Aluminum Perchlorate, combined with the presence of a rare earth Cerium (Ce) salt such as Cerium nitrate, or other salt of the cerium family, or a Nickel (Ni) salt such as Nickel nitrate, or other salt of the nickel family. A cross section view of the positive electrode is presented in Figure 1. For instance, in a premeasured volume of isopropyl alcohol, a premeasured quantity of a surfactant may be added. The surfactant may comprise the commercially available Triton X-100 [polyoxyethylene-(10) isooctylphenyl ether], another surfactant of the Triton family, or any other surfactant of any other category, preferably non-ionic, at a weight percentage that varies according to the chosen composition. Alternatively to the use of Triton X-100 surfactant, P123 or F127 Pluronic block copolymers could be used at a weight percentage that varies according to the chosen composition. An excess of commercially available acetic acid may be added, followed by addition of a premeasured volume of commercially available titanium butoxide, under vigorous stirring. A few drops of acetylacetonate or another β-diketonate may be added to the previous mixture. A premeasured quantity of cerium or nickel salt may be added at a relative composition of between 0.2M and 0.8M. A premeasured quantity of a lithium or aluminum salt may be added in a ratio ranging from 0.5/1 to 3/1 compared to the alkoxide of the titanium family. Exemplary printing parameters for Ce and Nickel modified TiO₂ films are listed in Table 5 and 6 respectively.

**Table 9: Exemplary printing parameters for Ce (or Ce-Li) modified TiO₂ ink**

| |
|---|
| Width of waveform (µs): 24.384 |
| Maximun Jetting Frequency (kHz): 12 |
| Firing voltage (V): 18-19 |
| Meniscus Vacuum (inches H₂O): 1.5 |
| Cartridge Temperature (°C): 28 |
| Cartridge Height (mm): 0.600 |
| Substrate Temperature (°C): ambient |

Exemplary printing parameters for Ni modified TiO₂ films are listed in table 6.

**Table 10: Exemplary printing parameters for Ni (or Ni-Li, or Ni-Al) modified TiO₂ ink.**

| |
|---|
| Width of waveform (µs): 24.287 |
| Maximun Jetting Frequency (kHz): 15 |
| Firing voltage (V): 18 |
| Meniscus Vacuum (inches H₂O): 2 |
| Cartridge Temperature (°C): 28 |
| Cartridge Height (mm): 0.80 |
| Substrate Temperature (°C): ambient |

The pattern on the conductive side of the glass can be few strips of Ce, Ni, Ce-Li, Ni-Li, or Ni-Al modified TiO₂ or, alternatively, the whole side could be covered with the material. The procedure may be applied to part or all of the width (e.g., 0.5 m - 1 m) of the substrate. Upon completion of the printing procedure, the substrate may be thermally cured at about 400-550°C for approximately 10 minutes to stabilize the Ce, Ni, Ce-Li, Ni-Li, or Ni-Al modified-TiO₂ films. Using inkjet printing, the above steps can be repeated several times to build a film having a thickness of about 0.2 to 1 micron, wherein different thicknesses have different effect to the electrochromic properties of the glass.

### Quasi-solid or solid state electrolyte composition

The quasi-solid state electrolyte intervenes between the two conductive glass electrodes in order to close a circuit and complete the electrochromic cell. The electrolyte is in the form of a gel with the presence of organic/inorganic hybrid material, or in liquid form that can transform in a highly viscous gel after been cured with UV light. Alternatively, a polymeric membrane can be applied between the two conductive glass electrodes.

### Quasi-solid state electrolyte with the presence of organic/inorganic hybrid material composition

The gel is formed with time by the presence of a colloidal solution which contains a silicon alkoxide in the presence of AcOH and ambient humidity yielding a -O-Si-O- network. Gel formation is due to (inorganic) polymerization -O-Si-O-. In the colloidal solution, a hybrid material is added where the organic part which is incorporated in the gel forms an organic subphase, which helps the ionic conductivity. Such substances are either ethyleneglycol or propyleneglycol oligomers, incorporated by chemical bonding with the -O-Si-O- network. In addition, an organic solvent is added, which is also incorporated in the gel, takes part in the formation of the organic subphase and allows increase of the ionic conductivity. Finally, an inorganic lithium salt is added to the colloidal solution. The colloidal solution slowly gels after AcOH addition. AcOH acts as a gel-control factor through ester formation Si-O-Ac or through slow water release by interaction between AcOH and alcohol. The exemplary electrolytes' formulations are the followings:

Electrolyte 1 About 5.75 grams of hybrid organic inorganic material (PPGICS-4000) are mixed with about 5.7 mL of sulfolane. 0.55 grams of Acetic acid were added to the mixture when finally, 0.85 grams of lithium perchlorate were also added.

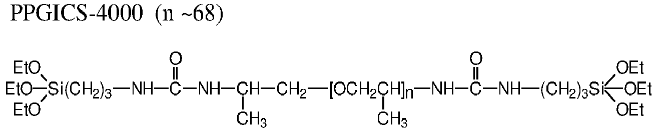

Electrolyte 2 About 2.29 grams of hybrid organic inorganic material (PPGICS-2000) are mixed with about 5.7 mL of sulfolane. 0.55 grams of Acetic acid were added to the mixture when finally, 0.85 grams of lithium perchlorate were also added.

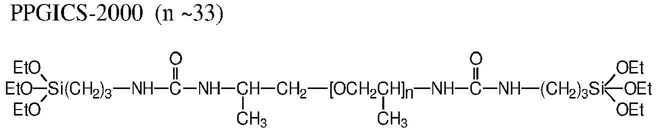

Electrolyte 3 About 0.68 grams of hybrid organic inorganic material (PPGICS-230) are mixed with about 5.7 mL of sulfolane. 0.55 grams of Acetic acid were added to the mixture when finally, 0.85 grams of lithium perchlorate were also added.

Electrolyte 4 About 2.0 grams of hybrid organic inorganic material (PEGICS-1900) are mixed with about 5.7 mL of sulfolane. 0.55 grams of Acetic acid were added to the mixture when finally, 0.85 grams of lithium perchlorate were also added.

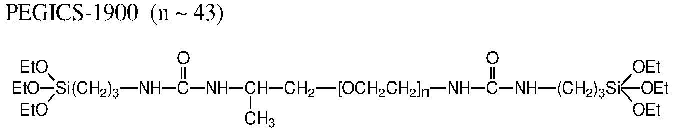

Electrolyte 5 About 1.8 grams of hybrid organic inorganic material (PEGICS-800) are mixed with about 5.7 mL of sulfolane. 0.55 grams of Acetic acid were added to the mixture when finally, 0.85 grams of lithium perchlorate were also added.

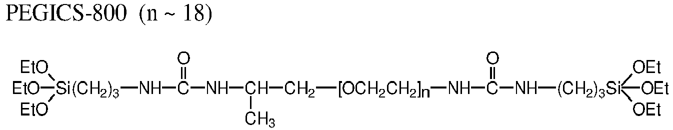

Electrolyte 6 About 1.7 grams of hybrid organic inorganic material (PEGICS-500) are mixed with about 5.7 mL of sulfolane. 0.55 grams of Acetic acid were added to the mixture when finally, 0.85 grams of lithium perchlorate were also added.

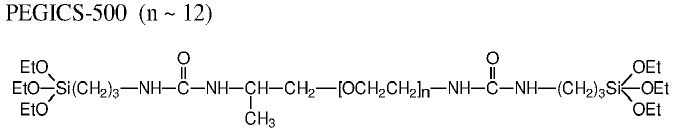

Electrolyte 7 About 1.75 grams of hybrid organic inorganic material (PPGPEGPPGICS-600) are mixed with about 5.7 mL of sulfolane. 0.55 grams of Acetic acid were added to the mixture when finally, 0.85 grams of lithium perchlorate were also added.

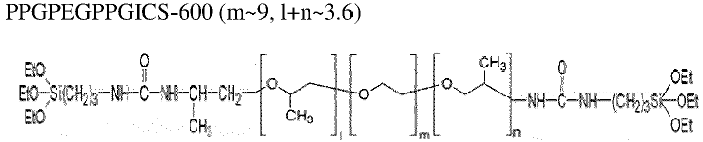

Electrolyte 8 As in the case of electrolyte n.7, about 1.75 grams of hybrid organic inorganic material (PPGPEGPPGICS-600) are now added to the mixture of 3.2 mL sulfolane and 2.5 mL methoxypropionitrile. 0.55 grams of Acetic acid were added to the mixture when finally, 0.85 grams of lithium perchlorate were also added.

Electrolyte 9 As in the case of electrolyte n.7, about 1.75 grams of hybrid organic inorganic material (PPGPEGPPGICS-600) are now added to the mixture of 3.2 mL sulfolane and 2.5 mL methoxypropionitrile. 0.55 grams of Acetic acid were added to the mixture when finally, 1.2 grams of lithium hexafluorophosphate are also added.

Electrolyte 10 As in the case of electrolyte n.7, about 1.75 grams of hybrid organic inorganic material (PPGPEGPPGICS-600) are now added to the mixture of 3.2 mL sulfolane and 2.5 mL methoxypropionitrile. 0.55 grams of Acetic acid were added to the mixture when finally, 0.75 grams of lithium tetrafluoroborate are also added.

Electrolyte 11 As in the case of electrolyte n.7, about 1.75 grams of hybrid organic inorganic material (PPGPEGPPGICS-600) are now added to the mixture of 3.2 mL sulfolane and 2.5 mL methoxypropionitrile. 0.55 grams of Acetic acid were added to the mixture when finally, 2.3 grams of Bis(trifluoromethane)sulfonamide lithium salt are also added.

### UV-curable quasi-solid state electrolyte

An alternative method to prepare a suitable gel electrolyte, is the exposure of an appropriate monomer and initiator to UV light. Gel formation is due to photopolymerization process. First, an inorganic lithium salt is diluted in one or more organic solvents, or an ionic liquid, or a mixture of organic solvent(s) and ionic liquid. Afterwards, an amount of the appropriate monomer and photoinitiator are added in the mixture. The mixture was then exposed to UV radiation in a Suntest Instrument (Atlas Suntest CPS+, 1200-1750 W, 5-15min). The exemplary electrolytes' formulations are the followings:
Electrolyte 1: 0.45 grams of Lithium Perchlorate were diluted in 3.5 mL of Sulfolane. After the complete dissolution of the lithium salt, 0.1 grams of Ethylene glycol dimethylacrylate and 0.003 grams of 2,2-Dimethoxy-2-phenylacetophenone were also added.
Electrolyte 2: 0.45 grams of Lithium Perchlorate were diluted in 3.5 mL of 1-Butyl-3-methylimidazolium bis(trifluoromethylsulfonyl)imide. After the complete dissolution of the lithium salt, 0.1 grams of Ethylene glycol dimethylacrylate and 0.003 grams of 2,2-Dimethoxy-2-phenylacetophenone were also added.
Electrolyte 3: 0.45 grams of Lithium Perchlorate were diluted in a mixture of x mL of Sulfolane and 3.5-x mL of 1-Butyl-3-methylimidazolium bis(trifluoromethylsulfonyl)imide (where 1≤ x≤ 3). After the complete dissolution of the lithium salt, 0.1 grams of Ethylene glycol dimethylacrylate and 0.003 grams of 2,2-Dimethoxy-2-phenylacetophenone were also added.
Electrolyte 4: 1.22 grams of Bis(trifluoromethane)sulfonimide lithium salt were diluted in 3.5 mL of Sulfolane. After the complete dissolution of the lithium salt, 0.1 grams of Ethylene glycol dimethylacrylate and 0.003 grams of 2,2-Dimethoxy-2-phenylacetophenone were also added.
Electrolyte 5: 1.22 grams of Bis(trifluoromethane)sulfonimide lithium salt were diluted in 3.5 mL of 1-Butyl-3-methylimidazolium bis(trifluoromethylsulfonyl)imide. After the complete dissolution of the lithium salt, 0.1 grams of Ethylene glycol dimethylacrylate and 0.003 grams of 2,2-Dimethoxy-2-phenylacetophenone were also added.
Electrolyte 6: 1.22 grams of Bis(trifluoromethane)sulfonimide lithium salt were diluted in a mixture of x mL of Sulfolane and 3.5-x mL of 1-Butyl-3-methylimidazolium bis(trifluoromethylsulfonyl)imide (where 1≤ x≤ 3). After the complete dissolution of the lithium salt, 0.1 grams of Ethylene glycol dimethylacrylate and 0.003 grams of 2,2-Dimethoxy-2-phenylacetophenone were also added.
Electrolyte 7: 0.45 grams of Lithium Perchlorate were diluted in 3.5 mL of Sulfolane. After the complete dissolution of the lithium salt, 0.1 grams of Glycidyl methacrylate and 0.003 grams of 2,2-Dimethoxy-2-phenylacetophenone were also added.
Electrolyte 8: 0.45 grams of Lithium Perchlorate were diluted in 3.5 mL of 1-Butyl-3-methylimidazolium bis(trifluoromethylsulfonyl)imide. After the complete dissolution of the lithium salt, 0.1 grams of Glycidyl methacrylate and 0.003 grams of 2,2-Dimethoxy-2-phenylacetophenone were also added.
Electrolyte 9: 0.45 grams of Lithium Perchlorate were diluted in a mixture of x mL of Sulfolane and 3.5-x mL of 1-Butyl-3-methylimidazolium bis(trifluoromethylsulfonyl)imide (where 1≤ x≤ 3). After the complete dissolution of the lithium salt, 0.1 grams of Glycidyl methacrylate and 0.003 grams of 2,2-Dimethoxy-2-phenylacetophenone were also added.
Electrolyte 10: 1.22 grams of Bis(trifluoromethane)sulfonimide lithium salt were diluted in 3.5 mL of Sulfolane. After the complete dissolution of the lithium salt, 0.1 grams of Glycidyl methacrylate and 0.003 grams of 2,2-Dimethoxy-2-phenylacetophenone were also added.
Electrolyte 11: 1.22 grams of Bis(trifluoromethane)sulfonimide lithium salt were diluted in 3.5 mL of 1-Butyl-3-methylimidazolium bis(trifluoromethylsulfonyl)imide. After the complete dissolution of the lithium salt, 0.1 grams of Glycidyl methacrylate and 0.003 grams of 2,2-Dimethoxy-2-phenylacetophenone were also added.
Electrolyte 12: 1.22 grams of Bis(trifluoromethane)sulfonimide lithium salt were diluted in a mixture of x mL of Sulfolane and 3.5-x mL of 1-Butyl-3-methylimidazolium bis(trifluoromethylsulfonyl)imide (where 1≤ x≤ 3). After the complete dissolution of the lithium salt, 0.1 grams of Glycidyl methacrylate and 0.003 grams of 2,2-Dimethoxy-2-phenylacetophenone were also added.

### Polymeric membrane used as electrolyte

In a different embodiment, instead of a quasi-solid electrolyte, a polymeric membrane with high ionic conductivity is prepared using an organic solvent or a mixture of organic solvents, an ionic liquid, an inorganic lithium salt and a suitable polymer. After the complete dissolution of the polymer and the lithium salt, the solvent(s) is(are) evaporated at suitable temperature, forming the polymeric membrane. Exemplary electrolytes' formulations are as follows:
Electrolyte 1: 0.08 grams of Bis(trifluoromethane)sulfonimide lithium salt were diluted in 1 mL of 1-Butyl-3-methylimidazolium methanesulfonate and 4ml of 2-Butanone. After the complete dissolution of the lithium salt, 0.3 grams of Poly(ethylene oxide) (MW: 500.000) were also added.
Electrolyte 2: 0.03 grams of Lithium Perchlorate were diluted in 1 mL of 1-Butyl-3-methylimidazolium methanesulfonate and 4ml of 2-Butanone. After the complete dissolution of the lithium salt, 0.3 grams of Poly(ethylene oxide) (MW: 500.000) were also added.
Electrolyte 3: 0.08 grams of Bis(trifluoromethane)sulfonimide lithium salt were diluted in 1 mL of 1-Butyl-3-methylimidazolium methanesulfonate and 4ml of 2-Butanone. After the complete dissolution of the lithium salt, 0.3 grams of Poly(methyl methacrylate) (MW: 350.000) were also added.
Electrolyte 4: 0.03 grams of Lithium Perchlorate were diluted in 1 mL of 1-Butyl-3-methylimidazolium methanesulfonate and 4ml of 2-Butanone. After the complete dissolution of the lithium salt, 0.3 grams of Poly(methyl methacrylate) (MW: 350.000) were also added.
Electrolyte 5: 0.08 grams of Bis(trifluoromethane)sulfonimide lithium salt were diluted in 1 mL of 1-Butyl-3-methylimidazolium tetrafluoroborate, 2ml of N-Methyl-2-pyrrolidone and 2ml of 2-Butanone. After the complete dissolution of the lithium salt, 0.3 grams of Poly(ethylene oxide) (MW: 500.000) were also added.
Electrolyte 6: 0.03 grams of Lithium Perchlorate were diluted in 1 mL of 1-Butyl-3-methylimidazolium tetrafluoroborate, 2ml of N-Methyl-2-pyrrolidone and 2ml of 2-Butanone. After the complete dissolution of the lithium salt, 0.3 grams of Poly(ethylene oxide) (MW: 500.000) were also added.
Electrolyte 7: 0.08 grams of Bis(trifluoromethane)sulfonimide lithium salt were diluted in 1 mL of 1-Butyl-3-methylimidazolium tetrafluoroborate, 2ml of N-Methyl-2-pyrrolidone and 2ml of 2-Butanone. After the complete dissolution of the lithium salt, 0.3 grams of Poly(methyl methacrylate) (MW: 350.000) were also added.
Electrolyte 8: 0.03 grams of Lithium Perchlorate were diluted in 1 mL of 1-Butyl-3-methylimidazolium tetrafluoroborate, 2ml of N-Methyl-2-pyrrolidone and 2ml of 2-Butanone. After the complete dissolution of the lithium salt, 0.3 grams of Poly(methyl methacrylate) (MW: 350.000) were also added.
Electrolyte 9: 0.08 grams of Bis(trifluoromethane)sulfonimide lithium salt were diluted in 1 mL of 1-Butyl-3-methylimidazolium bis(trifluoromethylsulfonyl)imide and 4ml of 2-Butanone. After the complete dissolution of the lithium salt, 0.3 grams of Poly(ethylene oxide) (MW: 500.000) were also added.
Electrolyte 10: 0.03 grams of Lithium Perchlorate were diluted in 1 mL of 1-Butyl-3-methylimidazolium bis(trifluoromethylsulfonyl)imide and 4ml of 2-Butanone. After the complete dissolution of the lithium salt, 0.3 grams of Poly(ethylene oxide) (MW: 500.000) were also added.
Electrolyte 11: 0.08 grams of Bis(trifluoromethane)sulfonimide lithium salt were diluted in 1 mL of 1-Butyl-3-methylimidazolium bis(trifluoromethylsulfonyl)imide and 4ml of 2-Butanone. After the complete dissolution of the lithium salt, 0.3 grams of Poly(methyl methacrylate) (MW: 350.000) were also added.
Electrolyte 12: 0.03 grams of Lithium Perchlorate were diluted in 1 mL of 1-Butyl-3-methylimidazolium bis(trifluoromethylsulfonyl)imide and 4ml of 2-Butanone. After the complete dissolution of the lithium salt, 0.3 grams of Poly(methyl methacrylate) (MW: 350.000) were also added.

### Matching of Two Single-Electrode Substrates

An exemplary process of bringing together the negative and positive electrode substrates is described in conjunction with Figure 1 which illustrate the combination of two electrode substrates. Figure 1 shows side elevation view of a negative electrode substrate, comprising a FTO glass substrate with WO₃ or TiO₂ or MoO₃ or V₂O₅ or Nb₂O₅, Ti modified WO₃, Ti modified Nb₂O₅, Nb modified WO₃, film, on top of a positive electrode substrate, comprising an FTO glass substrate with Ce modified TiO₂ film or/and Ni modified TiO₂ or/and Ce-Li modified TiO₂, or/and Ni-Li or/and Ni-Al modified TiO₂ film to complete the electrochromic cell. All films are made with inkjet printing. Performance of laser or other mechanical drilling allows the formation of two to four holes at the two/four corners of the positive or the negative electrode.

In the case of two single-electrode substrates matched together, in theory the substrates need not be subdivided into multiple electrochromic cells, effectively making the two matched substrates a large, single electrochromic cell. The matched single-electrode substrates can be stuck around with thermoplastic or UV curable material or simply by the use of the gel electrolyte or the polymeric membrane. In the case of the use of thermoplastic material, four 50 micrometer thick stripes of the thermoplastic material are put around to the one of the two electrodes (e.g. at the negative electrode). A hot plate presses the two glasses for 10 minutes and finally the two glasses are firmly stuck. Alternatively, a UV curable material could be inkjet printed or dispensed around the one of the two conductive glass substrates and the other glass is then matched on the top with both conductive surfaces facing each other.

### Electrolyte Filling to the ECP or inkjet printed electrolyte

During this step, as an exemplary process the electrolyte is introduced between the two electrodes through the holes in one of the substrates, using a filling machine at an electrolyte filling station. Figure 1 illustrates the holes that the electrolyte is incorporated in the ECP. In particular, Figure 1 illustrates how the electrolyte is inserted in the space between the two glass substrates. The two glass substrates, having the two conductive sides on opposing interior surfaces, are placed such that the electrodes line up and face each other. The glass substrate edges may be sealed, for instance, with silicone rubber or epoxy resin or thermoplastic material, so vacuum could be formed in the space between them.

In an exemplary embodiment, two to four holes of about 1mm in diameter are drilled with a precision drill or a laser at the two to four edges of any positive electrode as described above. A pressure differential may be applied at one or both of the holes, with electrolyte allowed to enter a hole, drift to fill all the available free space and cover the surfaces of the electrodes. This procedure is not available when using a polymeric membrane.

Alternatively, the electrolyte could be also inkjet printed onto the one of the two electrodes. As an exemplary embodiment the electrolyte as it is still in liquid state can be inkjet printed onto the positive electrode for instance on the top of Nickel modified TiO₂ layer and then the two glass substrates, having the two conductive sides on opposing interior surfaces, are placed such that the electrodes line up and face each other. If the polymeric membrane is used as electrolyte, the remaining solvent(s) should be evaporated before the two conductive sides are placed opposite each other.

Exemplary printing parameters for electrolyte inkjet printed on one of two electrodes are listed in Tables 11-13.

**Table 11: Exemplary printing parameters for electrolyte ink (with the presence of organic/inorganic hybrid material composition).**

| |
|---|
| Width of waveform (µs): 11.520 |
| Maximun Jetting Frequency (kHz): 10 |
| Firing voltage (V): 19-20 |
| Meniscus Vacuum (inches H₂O): 1 |
| Cartridge Temperature (°C): 28 |
| Cartridge Height (mm): 1 |
| Substrate Temperature (°C): ambient |

**Table 12: Exemplary printing parameters for UV-curable electrolyte ink.**

| |
|---|
| Width of waveform (µs): 14.890 |
| Maximun Jetting Frequency (kHz): 10 |
| Firing voltage (V): 18-19 |
| Meniscus Vacuum (inches H₂O): 1.5 |
| Cartridge Temperature (°C): 28 |
| Cartridge Height (mm): 1 |
| Substrate Temperature (°C): ambient |

**Table 13: Exemplary printing parameters for ink used for the polymeric membrane preparation.**

| |
|---|
| Width of waveform (µs): 13.120 |
| Maximun Jetting Frequency (kHz): 10 |
| Firing voltage (V): 17-18 |
| Meniscus Vacuum (inches H₂O): 1 |
| Cartridge Temperature (°C): 30 |
| Cartridge Height (mm): 1 |
| Substrate Temperature (°C): ambient |

A conductive finger of silver can be finally inkjet printed at the edge and the inner side of each conductive glass for the completion of the electrochromic devices allowing the connection with electrical wires. Alternatively, ultrasound soldering gun can be applied.

The foregoing description discloses exemplary embodiments of the invention. While the invention herein disclosed has been described by means of specific embodiments and applications thereof, numerous modifications and variations could be made thereto by those skilled in the art without departing from the scope of the invention set forth in the claims. Modifications of the above disclosed apparatus and methods that fall within the scope of the invention are readily apparent to those of ordinary skill in the art. Accordingly, other embodiments may fall within the spirit and scope of the invention, as defined by the following claims.

In the description above, numerous specific details are set forth in order to provide a more thorough understanding of embodiments of the invention. It will be apparent, however, to an artisan of ordinary skill that the invention may be practiced without incorporating all aspects of the specific details described herein. In other instances, specific details well known to those of ordinary skill in the art have not been described in detail so as not to obscure the invention. Readers should note that although examples of the invention are set forth herein, the claims, and the full scope of any equivalents, are what define the metes and bounds of the invention.

### Thermal insulating glass security system with ECP and tempered glass.

At this step an exemplary process of making a thermal insulating ECP glass combining with a tempered glass is described. The system is described in Figures 2 and 3. The tempered glass can be fitted either on the side of negative electrode of ECP glass or to the positive. The space between the ECP and tempered glass is filled with a gel which for instance can be inkjet printed on tempered glass. The composition of the gel can be described hereafter in several embodiments:
Gel 1 About 1.1 grams of hybrid organic inorganic material (PPGICS-4000) are mixed with about 0.688 grams of a mixture sulfolane/propylene carbonate (in ratio: 50/50 or 25/75 or 0/100 w%). 65 mg of acetic acid were added to the mixture. 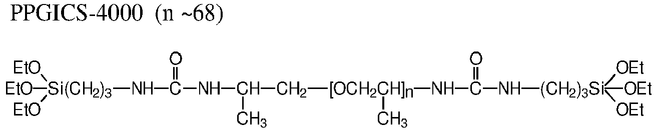
Gel 2 About 0.55 grams of hybrid organic inorganic material (PPGICS-2000) are mixed with about 0.688 grams of a mixture sulfolane/propylene carbonate (in ratio: 50/50 or 25/75 or 0/100 w%). 65 mg of acetic acid were added to the mixture. 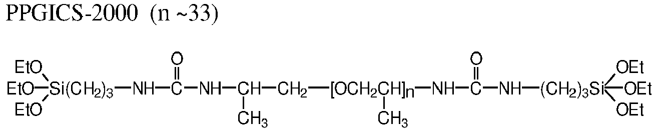
Gel 3 About 0.06 grams of hybrid organic inorganic material (PPGICS-230) are mixed with about 0.688 grams of a mixture sulfolane/propylene carbonate (in ratio: 50/50 or 25/75 or 0/100 w%). 65 mg of acetic acid were added to the mixture.
Gel 4 About 0.53 grams of hybrid organic inorganic material (PEGICS-1900 are mixed with about 0.688 grams of a mixture sulfolane/propylene carbonate (in ratio: 50/50 or 25/75 or 0/100 w%). 65 mg of acetic acid were added to the mixture. 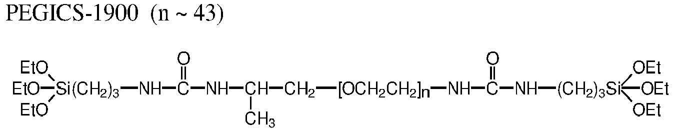
Gel 5 About 0.22 grams of hybrid organic inorganic material (PEGICS-800) are mixed with about 0.688 grams of a mixture sulfolane/propylene carbonate (in ratio: 50/50 or 25/75 or 0/100 w%). 65 mg of acetic acid were added to the mixture. 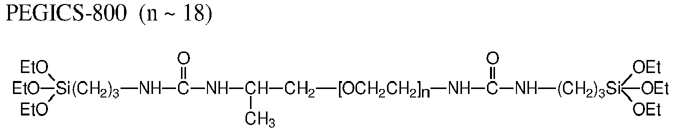
Gel 6 About 0.14 grams of hybrid organic inorganic material (PEGICS-500) are mixed with about 0.688 grams of a mixture sulfolane/propylene carbonate (in ratio: 50/50 or 25/75 or 0/100 w%). 65 mg of acetic acid were added to the mixture. 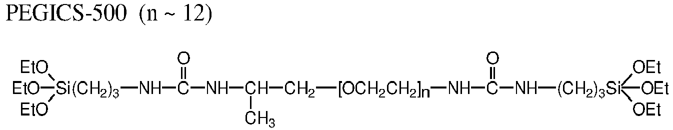
Gel 7 About 0.17 grams of hybrid organic inorganic material (PPGPEGPPGICS-600) are mixed with about 0.688 grams of a mixture sulfolane/propylene carbonate (in ratio: 50/50 or 25/75 or 0/100 w%). 65 mg of acetic acid were added to the mixture. 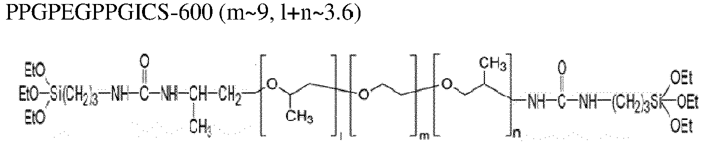
Gel 8 As in the case of electrolyte n.7, about 0.17 grams of hybrid organic inorganic material (PPGPEGPPGICS-600) are now added to the mixture 0.688 grams of a mixture sulfolane/methoxypropionitrile (in ratio: 50/50 or 25/75 or 0/100 w%). 65 mg of acetic acid were added to the mixture.

Formation of an exemplary thin film such as a Cerium modified TiO₂ as UV blocking layer could also be printed on the outer side of glass constitutes positive glass of ECP. In particular, formation of an exemplary thin film such as a Cerium modified TiO₂ on the outer side of the transparent conductive glass substrate can be made, for instance, by purely chemical processes by inkjet printing a colloidal solution, for example, in which controlled hydrolysis and polymerization of titanium butoxide, or another alkoxide of the Titanium family, takes place in the presence of a rare earth Cerium (Ce) salt such as Cerium nitrate, or other salt of the cerium family. A cross section view of the positive electrode is presented in Figure 2. Using inkjet printing, the above steps can be repeated several times to build a film having a thickness of about 0.2 to 1 micron, wherein different thicknesses have different effect to the UV blocking properties of the glass. The same procedure can be applied on both glass panes of ECP according to Figure 3.

### Controller design for driving ECP glass

ECP glass controller is an electronic apparatus in order to control the transmittance of electrochromic window. The system is based on a microcontroller. The device is designed to operate on two different modes. The first operating mode "Local mode" allows the user to choose the coloration level by using two switches which are suited on the electronic device. The second operating mode "Bluetooth mode" is available to allow the system to communicate with smartphones which have installed the application which is developed for the user to control the electrochromic window wirelessly.

The device comprises a power converter which provides lower voltage power supply for the electronic device and for the electrochromic window, the switches, the microcontroller, a controllable output, a reverse polarity unit and a Bluetooth module. Figure 4 represents the schematic diagram of the components of ECP controller. The power supply of the microcontroller includes a voltage regulator for protecting it from higher voltage and for keeping the voltage at constant level. The switches "SW1" and "SW2" which are connected at digital input pin D8 and D9 of the microcontroller are used in order to control the coloration level of the ECP. The switch "SW3" is used for choosing among two operating modes (Local mode - Bluetooth mode).

The microcontroller, that the device is based on, is the atmega328. It uses a microprocessor, which is capable to execute instruction in a programmable manner. A crystal at 16 MHz provides the clock pulse to microcontroller. Rx and Tx pins from the atmega328 are used for uploading the program to microcontroller. Digital pin 10 is used as PWM (Pulse with modulation) output and it generates a control signal which is connected to the base of transistor Q1. In order to reduce the current that flows from microcontroller and to make the signal smother, an R-C filter is used (R1, C2).

Since the microcontroller cannot drive enough current direct to load, a transistor (Q1) is used to amplify controller signal. Hence transistor Q1 controls the current which flows from the collector to emitter and consequently, to load. Resistor R3 is used as a shunt to calculate the current that flows to dynamic glass. Analog inputs A4, A5 are connected before the shunt resistor R3 and before the load. These two analog signals are converted to digital signals from analog to digital converter of atmega328 and are used to calculate current that flows to dynamic glass, and the voltage that is applied to it. Resistor R2 and capacitor C1 are connected to emitter of the transistor and to ground in order to reduce the output voltage noise and to make the output more stable. Relay 1 and Relay 2 are used for two main reasons. The first reason is that they let completely isolated the dynamic glass from the electronic device, when it needed, and the second reason is to invert the voltage polarity. The Relay 1 and Relay 2 are controlled by digital output pins D6 and D7.

Atmega328 is connected with Bluetooth module HC-05 which allows the system to operate wirelessly. Serial communication protocol is used with aim of achieving connection between microcontroller and Bluetooth module, using digital pins D2 and D3.

In summary, the present invention relates to Electrochromic glass Panes (ECP) formed using nanocomposite organic-inorganic materials deposited by inkjet printing. Exemplary ECP embodiments include films of WO₃, TiO₂, MoO₃, V₂O₅, Nb₂O₅, Ti modified WO₃, Ti modified Nb₂O₅, Nb modified WO₃ and Cerium, Nickel, Ce-Li, Ni-Li and Ni-Al modified titanium oxide inkjet-printed on fluorine-tin-oxide (FTO) conductive glass substrates. An exemplary deposition of organic-inorganic materials may be made at ambient conditions, while the plate of printer where the FTO glass substrates were placed may be kept at 25°C. Exemplary FTO glass substrates with dimensions of about 1x1.2 m² may be covered with WO₃, TiO₂, MoO₃, V₂O₅, Nb₂O₅, Ti modified WO₃, Ti modified Nb₂O₅, Nb modified WO₃ and Cerium, Nickel, Ce-Li, Ni-Li and Ni-Al modified titanium oxide thin films to form electrochromic devices in large scale. An electrolyte is added either filling the space between two opposing, complementary electrode substrates from pre-drilled holes or using inkjet printing technique to form the electrochromic devices. If a polymeric membrane is used instead of an electrolyte, the membrane is placed between the two opposing electrode substrates using inkjet printing technique. Numerous other aspects have been described. In addition, a safety tempered glass can be placed outward to the second or both first and second glass of ECP filling the space among them with an insulating gel which can be inkjet printed. The outward side of the first or/and second glass of ECP could possess a thin UV blocking layer which can be made using inkjet printer technique.

Further, the present disclosure comprises the following enumerated clauses, which define exemplary embodiments of the present invention:
1. Electrochromic glass pane, comprising an assembly of:
   a first part, comprising:
   a first glass plate covered on one side thereof with a conductive layer so that the first glass plate forms a first conductive substrate having a first conductive surface and a first non-conductive surface opposite the first conductive surface; and
   a negative semiconducting film on the first conductive surface, the negative semiconducting film being configured to function as a negative electrode of the electrochromic glass pane;
   a second part, comprising:
   a second glass plate covered on one side thereof with a conductive layer so that the second glass plate forms a second conductive substrate having a second conductive surface and a second non-conductive surface opposite the second conductive surface; and
   a positive semiconducting film on the second conductive surface, the positive semiconducting film being configured to function as a positive electrode of the electrochromic glass pane; and
   an electrolyte,
   wherein the first part and the second part are arranged on top of each other, such that the first conductive surface faces the second conductive surface, with the first and second non-conductive surfaces facing away from each other,
   wherein the electrolyte is arranged between the first and second conductive surfaces, and
   wherein the negative semiconducting film and the positive semiconducting film are formed by jet printing first and second electrochromic inks onto the first conductive surface and the second conductive surface, respectively.
2. Electrochromic glass pane according to clause 1, wherein the first electrochromic ink for the formation of the negative semiconducting film comprises a colloidal solution comprising WO₃ or TiO₂ or MoO₃ or V₂O₅ or Nb₂O₅ or Ti-modified WO₃ or Ti-modified Nb₂O₅ or Nb-modified WO₃
3. Electrochromic glass pane according to clause 1 or 2, wherein the second electrochromic ink for the formation of the negative semiconducting film comprises a colloidal solution comprising Ce-modified TiO₂ or Ce-Li-modified TiO₂ or Ni-modified TiO₂ or Ni-Li-modified TiO₂ or Ni-Al-modified TiO₂.
4. Electrochromic glass pane according to any one of clauses 1-3, wherein the electrolyte is a polymeric membrane acting as an electrolyte.
5. Electrochromic glass pane according to any one of clauses 1-4, further comprising a hole that extends between an exterior of the glass pane and an interior space between the negative semiconducting film and the positive semiconducting film for filling the interior space with the electrolyte.
6. Electrochromic glass pane according to any one of clauses 1-5, further comprising a UV blocking film on the first non-conductive surface of the first conductive substrate of the first part of the electrochromic glass pane and/or on the second non-conductive surface of the second conductive substrate of the second part of the electrochromic glass pane.
7. Electrochromic glass pane according to clause 6, wherein the UV blocking film is formed by inkjet printing a colloidal solution on the first non-conductive surface of the first conductive substrate and/or on the second non-conductive surface of the second conductive substrate, respectively.
8. Electrochromic glass pane according to any one of clauses 1-7, further comprising a safety tempered glass outside of the first conductive substrate and/or outside of the second conductive substrate.
9. Electrochromic glass pane according clause 8, further comprising a thermal insulating gel between the safety tempered glass and the first conductive substrate and/or between the safety tempered glass and the second conductive substrate, respectively.
10. Electrochromic glass pane according to any one of clauses 1-7, further comprising a controller connected to the electrochromic glass pane configured to control the transmittance of the electrochromic glass pane.
11. Electrochromic glass pane according to clause 10, wherein the controller is configured to be controlled manually or using Bluetooth.
12. Electrochromic glass pane according to any of one of the preceding clauses, wherein the negative and positive semiconducting films are composed of nanocomposite semiconducting oxides.
13. Electrochromic glass pane according to any of one of the preceding clauses, wherein the negative semiconducting film comprises inorganic nanocomposite oxides and/or modified inorganic nanocomposite oxides.
14. Electrochromic glass pane according to any of one of the preceding clauses, wherein the first and second conductive substrates are substantially planar and uniform in thickness.
15. Electrochromic glass pane according to any of one of the preceding clauses, wherein outer dimensions of the second conductive substrate and the first conductive substrate are substantially the same.
16. Method of producing an electrochromic glass pane, comprising: manufacturing a first part of the glass pane, comprising:
   providing a first glass plate;
   arranging on one side of the first glass plate a conductive layer so that the first glass plate forms a first conductive substrate having a first conductive surface and a first non-conductive surface opposite the first conductive surface; and
   by jet printing a first electrochromic ink, forming a negative semiconducting film on the first conductive surface, the negative semiconducting film being configured to function as a negative electrode of the electrochromic glass pane;
   manufacturing a second part of the glass pane, comprising:
      providing a second glass plate;
      arranging on one side of the second glass plate a conductive layer so that the second glass plate forms a second conductive substrate having a second conductive surface and a second non-conductive surface opposite the second conductive surface; and
      by jet printing a second electrochromic ink, forming a positive semiconducting film on the second conductive surface, the positive semiconducting film being configured to function as a positive electrode of the electrochromic glass pane;
      placing the first part and the second part on top of each other, such that the first conductive surface faces the second conductive surface, with the first and second non-conductive surfaces facing away from each other; and
      applying an electrolyte between the first and second conductive surfaces.
17. Method according to clause 16, wherein the first electrochromic ink for the formation of the negative semiconducting film comprises a colloidal solution comprising WO₃ or TiO₂ or MoO₃ or V₂O₅ or Nb₂O₅ or Ti-modified WO₃ or Ti-modified Nb₂O₅ or Nb-modified WO₃
18. Method according to clause 16 or 17, wherein the second electrochromic ink for the formation of the negative semiconducting film comprises a colloidal solution comprising Ce-modified TiO₂ or Ce-Li-modified TiO₂ or Ni-modified TiO₂ or Ni-Li-modified TiO₂ or Ni-Al-modified TiO₂.
19. Method according to any one of clauses 16 to 18, wherein the step of applying an electrolyte between the first and second conductive surfaces comprises inkjet printing the electrolyte onto the negative semiconducting film and/or the positive semiconducting film before the first and the second part are placed on top of each other.
20. Method according to any one of clauses 16 to 18, wherein the electrolyte is a polymeric membrane acting as an electrolyte.
21. Method according to clause 16, wherein the step of applying an electrolyte between the first and second conductive surfaces comprises filling an interior space between the negative semiconducting film and the positive semiconducting film with the electrolyte through at least one hole that extends between an exterior of the glass pane and the interior space.
22. Method according to any of one of clauses 16 to 21, further comprising: forming a UV blocking film on the first non-conductive surface of the first conductive substrate of the first part of the electrochromic glass pane and/or on the second non-conductive surface of the second conductive substrate of the second part of the electrochromic glass pane.
23. Method according to clause 22, wherein the UV blocking film is formed by inkjet printing a colloidal solution on the first non-conductive surface of the first conductive substrate of the first part of the electrochromic glass pane and/or on the second non-conductive surface of the second conductive substrate of the second part of the electrochromic glass pane, respectively.
24. Method according to any of one of clauses 16 to 23, further comprising: applying a safety tempered glass outside of the first conductive substrate and/or outside of the second conductive substrate.
25. Method according to clause 24, further comprising:
   disposing a thermal insulating gel between the safety tempered glass and the first conductive substrate and/or between the safety tempered glass and the second conductive substrate, respectively.
26. Method according to clause 25, wherein the step of disposing a thermal insulating gel comprises inkjet printing the thermal insulating gel.
27. Method according to any of one of clauses 16 to 26, further comprising:
   connecting the electrochromic glass pane to a controller configured to control the transmittance of the electrochromic glass pane.
28. Method according to clause 27, wherein the controller is operated manually or using Bluetooth.
29. Method according to any of one of clauses 16 to 28, wherein the negative and positive semiconducting films are composed of nanocomposite semiconducting oxides.
30. Method according to any of one of clauses 16 to 29, wherein the negative semiconducting film comprises inorganic nanocomposite oxides and/or modified inorganic nanocomposite oxides.
31. Method according to any of one of clauses 16 to 30, wherein the first and second conductive substrates are substantially planar and uniform in thickness.
32. Method according to any of one of clauses 16 to 31, wherein outer dimensions of the second conductive substrate and the first conductive substrate are substantially the same.

The drawings are illustrative of selected aspects of the present disclosure, and together with the description serve to explain principles and operation of methods, products, and systems embraced by the present disclosure.

It will be apparent to those skilled in the art that various modifications and variations can be made without departing from the spirit or scope of the invention. Since modifications combinations, sub-combinations and variations of the disclosed embodiments incorporating the spirit and substance of the invention may occur to persons skilled in the art, the invention should be construed to include everything within the scope of the appended claims and their equivalents.

## Claims

1. Electrochromic glass pane, comprising an assembly of:
a first part, comprising:
a first glass plate covered on one side thereof with a conductive layer so that the first glass plate forms a first conductive substrate having a first conductive surface and a first non-conductive surface opposite the first conductive surface; and
a negative semiconducting film on the first conductive surface, the negative semiconducting film being configured to function as a negative electrode of the electrochromic glass pane;
a second part, comprising:
a second glass plate covered on one side thereof with a conductive layer so that the second glass plate forms a second conductive substrate having a second conductive surface and a second non-conductive surface opposite the second conductive surface; and
a positive semiconducting film on the second conductive surface, the positive semiconducting film being configured to function as a positive electrode of the electrochromic glass pane; and
an electrolyte,
wherein the first part and the second part are arranged on top of each other, such that the first conductive surface faces the second conductive surface, with the first and second non-conductive surfaces facing away from each other,
wherein the electrolyte is arranged between the first and second conductive surfaces, and
wherein the negative semiconducting film and the positive semiconducting film are formed by jet printing first and second electrochromic inks onto the first conductive surface and the second conductive surface, respectively.

2. Electrochromic glass pane according to claim 1, wherein the first electrochromic ink for the formation of the negative semiconducting film comprises a colloidal solution comprising WO₃ or TiO₂ or MoO₃ or V₂O₅ or Nb₂O₅ or Ti-modified WO₃ or Ti-modified Nb₂O₅ or Nb-modified WO₃

3. Electrochromic glass pane according to claim 1 or 2, wherein the second electrochromic ink for the formation of the negative semiconducting film comprises a colloidal solution comprising Ce-modified TiO₂ or Ce-Li-modified TiO₂ or Ni-modified TiO₂ or Ni-Li-modified TiO₂ or Ni-Al-modified TiO₂.

4. Electrochromic glass pane according to any one of claims 1-3, wherein the electrolyte is a polymeric membrane acting as an electrolyte.

5. Electrochromic glass pane according to any one of claims 1-4, further comprising a hole that extends between an exterior of the glass pane and an interior space between the negative semiconducting film and the positive semiconducting film for filling the interior space with the electrolyte.

6. Electrochromic glass pane according to any one of claims 1-5, further comprising a UV blocking film on the first non-conductive surface of the first conductive substrate of the first part of the electrochromic glass pane and/or on the second non-conductive surface of the second conductive substrate of the second part of the electrochromic glass pane.

7. Electrochromic glass pane according to claim 6, wherein the UV blocking film is formed by inkjet printing a colloidal solution on the first non-conductive surface of the first conductive substrate and/or on the second non-conductive surface of the second conductive substrate, respectively.

8. Electrochromic glass pane according to any one of claims 1-7, further comprising a safety tempered glass outside of the first conductive substrate and/or outside of the second conductive substrate.

9. Electrochromic glass pane according claim 8, further comprising a thermal insulating gel between the safety tempered glass and the first conductive substrate and/or between the safety tempered glass and the second conductive substrate, respectively.

10. Electrochromic glass pane according to any one of claims 1-7, further comprising a controller connected to the electrochromic glass pane configured to control the transmittance of the electrochromic glass pane, preferably wherein the controller is configured to be controlled manually or using Bluetooth.

11. Electrochromic glass pane according to any of one of the preceding claims, wherein the negative and positive semiconducting films are composed of nanocomposite semiconducting oxides.

12. Electrochromic glass pane according to any of one of the preceding claims, wherein the negative semiconducting film comprises inorganic nanocomposite oxides and/or modified inorganic nanocomposite oxides.

13. Method of producing an electrochromic glass pane, comprising:
manufacturing a first part of the glass pane, comprising:
providing a first glass plate;
arranging on one side of the first glass plate a conductive layer so that the first glass plate forms a first conductive substrate having a first conductive surface and a first non-conductive surface opposite the first conductive surface; and
by jet printing a first electrochromic ink, forming a negative semiconducting film on the first conductive surface, the negative semiconducting film being configured to function as a negative electrode of the electrochromic glass pane;
manufacturing a second part of the glass pane, comprising:
providing a second glass plate;
arranging on one side of the second glass plate a conductive layer so that the second glass plate forms a second conductive substrate having a second conductive surface and a second non-conductive surface opposite the second conductive surface; and
by jet printing a second electrochromic ink, forming a positive semiconducting film on the second conductive surface, the positive semiconducting film being configured to function as a positive electrode of the electrochromic glass pane;
placing the first part and the second part on top of each other, such that the first conductive surface faces the second conductive surface, with the first and second non-conductive surfaces facing away from each other; and
applying an electrolyte between the first and second conductive surfaces.

14. Method according to claim 13, wherein the first electrochromic ink for the formation of the negative semiconducting film comprises a colloidal solution comprising WO₃ or TiO₂ or MoO₃ or V₂O₅ or Nb₂O₅ or Ti-modified WO₃ or Ti-modified Nb₂O₅ or Nb-modified WO₃

15. Method according to claim 13 or 14, wherein the second electrochromic ink for the formation of the negative semiconducting film comprises a colloidal solution comprising Ce-modified TiO₂ or Ce-Li-modified TiO₂ or Ni-modified TiO₂ or Ni-Li-modified TiO₂ or Ni-Al-modified TiO₂.
